Europäisches Patentamt

European Patent Office

Office européen des brevets

(11) Veröffentlichungsnummer: **0 354 960**

**A1**

(12) **EUROPÄISCHE PATENTANMELDUNG**
veröffentlicht nach Art. 158 Abs. 3
EPÜ

(21) Anmeldenummer: 88903465.8

(22) Anmeldetag: 12.01.88

(86) Internationale Anmeldenummer:
PCT/SU88/00009

(87) Internationale Veröffentlichungsnummer:
WO 89/06671 (27.07.89 89/16)

(51) Int. Cl.4: **C09B 61/00 , A23L 2/00**

(43) Veröffentlichungstag der Anmeldung:
21.02.90 Patentblatt 90/08

(84) Benannte Vertragsstaaten:
**DE FR GB IT**

(71) Anmelder: **INSTITUT BIOORGANICHESKOI KHIMII AKADEMII NAUK UZBEXKOI SSR**
pr. M. Gorkogo, 83
**Tashkent, 700143(US)**

(72) Erfinder: **KARIMDZHANOV, Akbar**
massiv Junus-Abad, kvartal 14, 36-15
**Tashkent, 700206(SU)**
Erfinder: **RAKHIMKHANOV, Zukretdin B.**
**Ordzhonikidzovsky raion**
**Tuzelsky selsovet sovkhoz imeni Musy Mukhamedova**
**Tashkentskaya obl., 702166(SU)**
Erfinder: **SADYKOV, Abid Sadykovich**
ul. Germana Lopatina, 64-1
**Tashkent, 700031(SU)**
Erfinder: **ISMAILOV, Amindzhan Ismailovich**
ul. Novo-Ladozhskaya, 1
**Tashkent, 700077(SU)**
Erfinder: **MUKHAMEDOVA, Fatima Khisanovna**
**Kuibyshevskoe shosse, 5-6-61**
**Tashkent, 700074(SU)**
Erfinder: **KHEZHIMATOV, Kakhkhor**
**Lunacharskoe shosse, 59-12**
**Tashkent, 700077(SU)**
Erfinder: **MARTYNOVA, Susanna Anatolievna**
massiv Junus-Abad, kvartal 12, 23-11

**Tashkent, 700180(SU)**
Erfinder: **RASULOVA, Aziza**
**Akmal-Ikramovsky raion, kvartal 26, 21-61**
**Tashkent, 700131(SU)**
Erfinder: **ZYKOVA, Alla Ivanovna**
**Chilanzarsky raion, kvartal 9, 9a-11**
**Tashkent, 700112(SU)**
Erfinder: **ISLAMBEKOV, Shavkat Juldashevich**
ul. Pochtovaya, tynuk 4, 1
**Tashkent 700143(SU)**
Erfinder: **SALIKHOV, Surat Akramovich**
ul. Faal, 15
**Tashkent, 700128(SU)**
Erfinder: **MASUDOV, Omonillo Sagdullaevich**
ul. A.Tadzhieva, 1 proezd, 2
**Akmal-Ikramovsky**
**raion Tashkent, 700151(SU)**
Erfinder: **SERDJUKOVA, Oktyabrina Andreevna**
ul. Tselinogradskaya, 103
**Tashkent, 700120(SU)**
Erfinder: **KOBETS, Larisa Grigorievna**
ul. Lakhuti, 15-3
**Tashkent, 700015(SU)**
Erfinder: **REZYAPKINA, Galina Ivanovna**
ul. Sapernaya, 10-37
**Tashkent, 700031(SU)**

(74) Vertreter: **von Füner, Alexander, Dr.**
**Patentanwälte v. Füner, Ebbinghaus, Finck**
**Mariahilfplatz 2 & 3**
**D-8000 München 90(DE)**

(54) **NÄHRMITTELFARBSTOFF AUS ROHEM PFLANZENMATERAIL, VERFAHREN ZUR HERSTELLUNG UND ALKOHOLFREIES TONIKGETRÄNK DARAUS.**

(57) Die vorliegende Erfindung bezieht sich auf die Lebensmittelindustrie.

Der Lebensmittelfarbstoff aus pflanzlichen Rohstoffen stellt einen Extrakt dar, der aus anthozyanhaltigen pflanlichen Rohstoffen extrahiert ist und aus folgenden Komponenten in Masse% besteht:

| | |
|---|---|
| Zyanidinglykoside | 0,2 bis 6,4 |
| Päonidinglykoside | 0,1 bis 5,3 |
| Delphinidinglykoside | 0,1 bis 4,0 |
| Malvidinglykoside und/oder | 0,1 bis 3,6 |
| Petunidinglykoside | 0,05 bis 1,5 |
| Flavonole | 1,0 bis 6,0 |
| Tannin | 1,0 bis 14,0 |
| organische Säuren | 28,0 bis 43,0 |
| Mineralsalze, Spurenèlemente und Polysaccharide | alles übrige |

Das Verfahren zur Herstellung des angegebenen Farbstoffs besteht darin, dass man die Extraktion von Anthozyanen aus Fruchtfleischtrestern anthozyanhaltiger Pflanzen mit einer auf höchstens 3,5 pH-Wert angesäuerten Wasser-Äthanol-Lösung durchführt, dann die sekundäre Extraktion von Anthozyanen aus Blüten anthozyanhaltiger Pflanzen mit dem aus Trestern gewonnenen Extrakt verwirklicht und den sekundären Extrakt anschliessend abtrennt oder die primäre Extraktion von Anthozyanen aus Blüten anthozyanhaltiger Pflanzen mit einer auf höchstens 3,5 pH-Wert angesäuerten wässrigen Lösung vornimmt, den gewonnenen Extrakt eindampft und ihn mit dem angegebenen vorher eingedampften Extrakt aus Trestern in einem Verhältnis von 1:4 bzw. 1:5 vermischt, danach das Endprodukt entweder durch Einführen von Tannin in die erhaltene Mischung oder durch Eindampfen des genannten sekundären Extrakts in Gegenwart von Tannin extrahiert.

Das alkoholfreie Tonikum enthält die folgenden Komponenten in kg je 100 dal des Getränks:

| | |
|---|---|
| Fruchtsaft | 100,0 bis 106,0 |
| Zucker | 67,0 bis 71,0 |
| Zitronensäure | 1,28 bis 1,40 |
| Lebensmittelfarbstoff | 1,54 bis 1,80 |
| Vanillin | 0,0017 bis 0,0022 |
| Äthylalkohol | 0,4 bis 0,06 |
| Kohlendioxid | 20,0 |
| Wasser | alles übrige. |

# LEBENSMITTELFARBSTOFF AUS PFLANZLICHEN ROHSTOFFEN, VERFAHREN ZUR HERSTELLUNG DESSELBEN UND IHN ENTHALTENDES ALKOHOLFREIES TONIKUM

## Technisches Gebiet

Die vorliegende Erfindung bezieht sich auf die Lebensmittelindustrie und insbesondere auf einen Lebensmittelfarbstoff aus pflanzlichen Rohstoffen, ein Verfahren zur Herstellung desselben und ein ihn enthaltendes alkoholfreies Tonikum.

## Zugrundeliegender Stand der Technik

Bekannt sind Lebensmittelfarbstoffe auf der Basis von Anthozyanen, welche aus Trestern oder Fruchsaft von Maulbeerbaum, Weintraube, Pflaume oder Kirsche erhalten und zum Anfärben von Konditoreierzeugnissen oder Likören und Wodka verwendet werden. Die angegebenen Farbstoffe stellt man durch Extrahieren von Anthozyanen aus Trestern oder Saft der erwähnten Früchte in Gegenwart von Schwefligsäureanhydrid oder Salzsäure her (FR, A, 2331615, 2260620, 2299385; SU, A, 126570; SU, A, 231051). Bekannt ist ebenfalls ein Lebensmittelfarbstoff auf der Basis von Anthozyanen, die aus Blüten der Stockrose der Gattung (Althaea aus der Familie Malvaceae (SU, A, 704971; SU, A, 571492) isoliert sind.

Das Verfahren zur Herstellung des angegebenen Farbstoffs besteht darin, dass Blüten der Stockrose mit Azeton-Wasser-Mischung im Verhältnis von 1:1 bei einer zwischen 50 und 55°C liegenden Temperatur oder mit einer 1%igen wässrigen Zitronensäurelösung bei einer Temperatur von 40°C extrahiert werden. Das Pflanzenrohstoff-Extraktionsmittel-Verhältnis beträgt 1:50. Der gewonnene Extrakt wird abgetrennt und eingedickt. Der Anthozyangehalt des Endprodukts ist 36 g/l gleich.

Die angegebenen Lebensmittelfarbstoffe zeigen eine geringe Lagerungsbeständigkeit sowohl in Einzelform als auch in Erzeugnissen, in denen sie verwendet werden. Diese Lebensmittelfarbstoffe besitzen ausserdem eine beschränkte Farbtonpalette. Das alles begrenzt ihr Anwendungsgebiet.

Die Verfahren zur Herstellung der angegebenen Farbstoffe ermöglichen es nicht, die Anthozyane vollständig und selektiv zu extrahieren. Die Verwendung eines toxischen organischen Lösungsmittels (des Azetons) erschwert ausserdem die Verfahrenstechnologie.

Bekannt ist die Verwendung von Lebensmittelfarbstoffen darunter auch aus pflanzlichen Rohstoffen während der Herstellung von alkoholfreien Tonika, so ist zum Beispiel bekannt ein alkoholfreies Tonikum, das Kräuteraufgüsse (Aloe, Sterkuliengewächse, Erdbeerblätter), Zucker und Kohlensäure enthält. Als Lebensmittelfarbstoff enthält es ein Gemisch von Saft der roten Rübe und Zitronensäure (SU, A, 824955).

Das erwähnte Getränk weist eine instabile Farbe auf, weil Farbstoffe auf der Basis des Rübensaftes unbeständig sind und ihre ursprüngliche Farbe bei der Aufbewahrung verlieren.

Bekannt sind auch alkoholfreie Tinika, welche Obstsaft, Zucker, Lebensmittelfarbstoff, Zitronensäure, Vanillin, Äthylalkohol, Kohlenstoffdioxid enthalten. Als Lebensmittelfarbstoffe dienen Indigokarmin, Tartrazin F und andere synthetische Farbstoffe (Rezepturen für alkoholfreie Getränke, Moskau, 1973. Retseptury na bezalkogolnye napitki, Moskau, 1973).

Die Angegebenen Getränke enthalten synthetische Lebensmittelfarbstoffe, die im Organismus des Menschen toxisch wirken.

Offenbarung der Erfindung

Der Erfindung liegt die Aufgabe zugrunde, durch Änderung der Zusammensetzung und Auswahl eines bestimmten Mischungsverhältnisses sowie durch Änderung von Extraktionsbedigungen für pflanzliche Rohstoffe einen Lebensmittelfarbstoff aus pflanzlichen Rohstoffen herzustellen, welcher eine hohe Qualität, und Beständigkeit, eine breite Farbtonpalette aufweist, ein weites Anwendungsbereich, darunter bei der Herstellung eines alkoholfreien hochwertigen Tonikums mit einer stabilen Farbe hat, sowie ein Verfahren zur Herstellung des erfindungsgemässen Farbstoffs zu entwickeln, das möglich macht, Anthozyane aus pflanzlichen Rohstoffen vollständig und selektiv zu extrahieren und in der Lebensmittelindustrie vorkommende pflanzliche Abfallprodukte zu verwerten.

Die Aufgabe ist dadurch gelöst worden, dass ein Lebensmittelfarbstoff aus pflanzlichen Rohstoffen auf der Basis von Anthozyanen erfindungsgemäss einen Extrakt darstellt, der aus anthozyanhaltigen pflanzlichen Rohstoffen extrahiert ist und aus folgenden Komponenten in Masse% besteht:

| | | |
|---|---|---|
| Zyanidinglykoside | 0,2 bis | 6,4 |
| Päonidinglykoside | 0,1 bis | 5,3 |
| Delphinidinglykoside | 0,1 bis | 4,0 |
| Petunidinglykoside und/oder | 0,05 bis | 1,5 |
| Malvidinglykoside | 0,01 bis | 3,6 |
| Flavonole | 1,0 bis | 6,0 |
| Tannin | 1,0 bis | 14,0 |
| organische Säuren | 28,0 bis | 43,0 |
| Mineralsalze, | | |
| Spurenelemente, | | |
| Polysaccharide | alles übrige | |

Bei der Herstellung von Konditoreierzeugnissen und alkoholfreien Getränken wird vorzugsweise der erfindungsgemässe Lebensmittelfarbstoff verwendet, der einen aus der Stockrose Althaea rosea oder den Hybridformen von Hibiscus spp. und dem Maulbeerbaum Morus nigra und der Weintraube Vitis vinifera gewonnenen Extrakt darstellt und aus folgenden Komponenten in Masse% besteht:

| | | |
|---|---|---|
| Zyanidinglykoside | 2,1 bis | 6,4 |
| Päonidinglykoside | 0,2 bis | 5,3 |
| Delphinidinglykoside | 0,2 bis | 3,5 |
| Malvidinglykoside | 0,4 bis | 3,0 |
| Petunidinglykoside | 0,1 bis | 1,5 |
| Flavonole | 1,0 bis | 6,0 |
| Tannin | 1,0 bis | 5,0 |
| organische Säuren | 29,0 bis | 40,0 |

Mineralsalze,

Spurenelemente,

Polysaccharide                    alles übrige

Bei der Herstellung von Wurstwaren wird vorzugsweise der erfindungsgemässe Lebensmittelfarbstoff verwendet, der einen aus der Stockrose Althaea rosea oder den Hybridformen von Hibiscus spp. und dem Maulbeerbaum Morus nigra und der Weintraube Vitis vinifera gewonnenen Extrakt darstellt und aus folgenden Komponenten in Masse% besteht:

| | | | |
|---|---|---|---|
| Zyanidinglykoside | 2,0 | bis | 6,0 |
| Päonidinglykoside | 0,1 | bis | 5,3 |
| Delphinidinglykoside | 0,75 | bis | 1,8 |
| Malvidinglykoside | 0,1 | bis | 2,0 |
| Petunidinglykoside | 0,05 | bis | 0,6 |
| Flavonole | 1,0 | bis | 6,0 |
| Tannin | 1,0 | bis | 5,0 |
| organische Säuren | 29,0 | bis | 40,0 |

Mineralsalze,

Spurenelemente,

Polysaccharide                    alles übrige

Für die Fleischstempelung ist der erfindungsgemässe Lebensmittelfarbstoff zweckmässigerweise zu verwenden, der einen aus der Stockrose Althaea rosea oder den Hybridformen von Hibiscus spp. und der Weintraube Vitis vinifera gewonnenen eingedickten wässrig-äthanolischen Extrakt darstellt und aus folgenden Komponenten in Masse% besteht:

| | | | |
|---|---|---|---|
| Zyanidinglykoside | 0,20 | bis | 0,45 |
| Päonidinglykoside | 0,60 | bis | 0,95 |
| Delphinidinglukoside | 0,10 | bis | 1,85 |
| Malvidinglykoside | 0,91 | bis | 2,35 |
| Petunidinglykoside | 0,25 | bis | 0,55 |
| Flavonole | 1,0 | bis | 2,0 |
| Tannin | 4,0 | bis | 7,0 |
| organische Säuren | 13,0 | bis | 18,0 |

Mineralsalze ,

Spurenelemente und

Polysaccharide                           10,0  bis 17,0

Wasser und Äthylalkohol                   alles übrige

Der erfindungsgemässe Lebensmittelfarbstoff, hergestellt aus pflanzlichen Rohstoffen, weist einen breiten Farbtonbereich auf, ist lagerungs- und gebrauchsbeständig, hat einen angenehmen Geschmack und Geruch, enthält keine toxischen Verbindungen.

Der erfindungsgemässe Lebensmittelfarbstoff enthält ausserdem biologisch aktive Verbindungen, die aus pflanzlichen Rohstoffen extrahiert sind, was die Qualität des Lebensmittelfarbstoffs erhöht.

Gegenstand der Erfindung ist weiterhin ein Verfahren zur Herstellung eines Lebensmittelfarbstoffs, welches die Extraktion von Anthozyanen aus anthozyanhaltigen pflanzlichen Rohstoffen, die Abtrennung des Extrakts und anschliessende Herstellung des Endprodukts aus diesem vorsieht, bei dem man erfindungsgemäss die Extraktion von Anthozyanen aus Fruchtfleischtrestern anthozyanhaltiger Pflanzen mit einer auf höchstens 3,5 pH-Wert angesäuerten Wasser-Äthanol-Lösung durchführt, dann mit dem aus Trestern gewonnenen Extrakt anthozyanhaltiger Pflanzen unter anschliessendem Abtrennen des sekundären Extrakts die sekundäre Extraktion von Anthozyanen aus Blüten anthozyanhaltiger Pflanzen verwirklicht und den sekundären Extrakt anschliessen abtrennt oder die primäre Extraktion von Anthozyanen aus Blüten anthozyanhaltiger Pflanzen mit einer auf höchstens 3,5 pH-Wert angesäuerten wässrigen Lösung vornimmt, den gewonnenen Extrakt eindampft und ihn mit dem angegebenen vorher eingedampften Extrakt aus Trestern in einem Verhältnis von 1:4 bzw. 1:5 vermischt, danach das Endprodukt isoliert, indem man dem erhaltenen Gemisch Tannin zusetzt oder den angegebenen sekundären Extrakt in Anwesenheit von Tannin eindampft.

Das erfindungsgemässe Verfahren macht es möglich, die Endproduktqualität zu erhöhen (d.h. den Anthozyangehalt auf 12,5 Masse% zu bringen).

Als Früchte anthozyanhaltiger Pflanzen sind Fruchtfleischtrester von Maulbeerbaum Morus nigra oder Weintraube Vitis vinifera zweckmässigerweise zu verwenden, welche als Abfälle bei der Produktion vorkommen. Dadurch kann das angegebene Verfahren wirtschaftlich ausgestaltet werden.

Als Blüten anthozyanhaltiger Pflanzen sind vorzugsweise Blüten der Stockrose Althaea rosea oder Blüten der Hybridformen von Hibiscus spp. zu verwenden, weil sie einen hohen Anthozyangehalt von 10 Masse% Zeigen.

Um den Lebensmittelfarbstoff mit einem hohen Anthozyangehalt gerzustellen, ist der abgetrennte sekundäre Extrakt mit dem Fruchtsaft von Maulbeerbaum Morus nigra zweckmässigerweise zu vermischen.

Zur Herstellung des Lebensmittelfarbstoffs für Konditoreierzeugnisse, Wurstwaren und alkoholfreie Getränke ist es zweckmässig, die Extraktion von Fruchtfleischtrestern des Maulbeerbaums Morus nigra oder der Weintraube Vitis vinifera mit einer 20- bis 25%igen wässrigen Äthanollösung, angesäuert auf einen pH-Wert von 2,7 bis 3,0 durchzuführen, dann mit dem gewonnenen Extrakt die Extraktion von Anthozyanen aus Blüten der Stockrose oder Hybridformen von Hibiscus zu verwirklichen und den abgetrennten Extrakt mit dem Fruchtsaft des Maulbeerbaums zu vermischen, anschliessend das erhaltene Gemisch bei einer zwischen 65 und 70°C liegenden Temperatur in Anwesenheit von Tannin bis zur Herstellung des Endprodukts einzudampfen.

Die angegebene Bedingungen für die Durchführung des erfindungsgemässen Verfahren machen es möglich, Anthozyane darunter auch Zyanidinglykoside aus pflanzlichen Rohstoffen im höchsten Grad zu isolieren, wodurch das erwähnte Anwendungsgebiet des erfindungsgemässen Farbstoffs gesichert wird.

Zur Herstellung des Lebensmittelfarbstoffs, welcher bei der Fleischtempelung verwendet wird, ist die Extraktion von Weintrestern Vitis vinifera mit einer 25- bis 35%igen wässrigen Äthanollösung, angesäuert auf einen pH-Wert von 2,7 bis 3,0 zweckmässigerweise durchzuführen, den gewonnenen Extrakt einzudampfen, bis der Gehalt an Trockensubstanz 36 bis 42% erreicht, dann die Extraktion von Blüten der Stockrose oder der Hybridformen von Hibiscus mit einer 1,5- bis 2%igen wässrigen Zitronensäurelösung unter darauffolgendem Eindampfen derselben zu verwirklichen, bis der Gehalt an Trockensubstanz 42 bis 45% erreicht, den erhaltenen eingedampften Extrakt mit dem angegebenen Extrakt aus Weintrestern in einem Verhältnis von 1:4 bzw. 1:5 zu vermischen, dem Gemisch Tannin zuzusetzen, um das Endprodukt herzustellen.

Diese Ausführungsform des erfindungsgemässen Verfahrens gestattet, das maximale Isolieren solcher Anthozyane wie Glykoside von Petunidin und Malvidin zu verwirklichen. Die angegebenen Glykoside werden in Anwesenheit von Tannin an Fleischeiweisse gebunden, indem sie einen beständigen und deutlichen Stempel von dunkelroter Farbe erzeugen.

Gegenstand der Erfindung ist weiterhin ein alkoholfreies Tonikum, welches Zucker, Zitronensäure, Fruchtsaft, Vanillin, Äthylalkohol, Lebensmittelfarbstoff und Kohlendioxid enthält, wobei es als Lebensmittelfarbstoff erfindungsgemäss den angegebenen erfindungsgemässen Lebensmittelfarbstoff bei folgendem Verhältnis von Ausgangskomponenten in kg je 100 dal Getränk enthält:

| | |
|---|---|
| Fruchtsaft | 100,0 bis 106,0 |
| Zucker | 67,0 bis 71,0 |
| Zitronensäure | 1,28 bis 1,40 |
| Lebensfarbstoffmittel | 1,54 bis 1,80 |
| Vanillin | 0,0017 bis 0,0022 |
| Äthylalkohol | 0,04 bis 0,06 |
| Kohlendioxid | 20,0 |
| Wasser | alles übrige |

Das erfindungsgemässe Getränk besitzt einen angenehmen Fruchtgeschmack und -geruch, ist stabil rosafarben, was durch Zugabe der angegebenen Menge des erfindungsgemässen Lebensmittelfarbstoffs in die Zusammensetzung des Getränks erreicht wird. Der in die Zusammensetzung des Getränks zugegebene erfindungsgemässe Farbstoff verleiht dem Getränk eine erforderliche Farbe und reichert es mit biologisch wirksamen Stoffen an.

Die beste Ausführungsform der Erfindung

Der erfindungsgemässe Lebensmittelfarbstoff kann je nach dem Einsatzbereich in Trockenform oder als dickes Konzentrat hergestellt werden. Der erfindungsgemässe Lebensmittelfarbstoff in Trockenform ist ein pulverförmiges purpurfarbenes Produkts, welches wasserlöslich ist, sauer schmekt und nach Früchten angenehm riecht.

Der erfindungsgemässe Lebensmittelfarbstoff in Form eines eingedickten Konzentrats ist eine dichte sirupartige dunkelrote bis dunkelhimbeerfarbene Flüssigkeit, die sauer schmeckt und nach Früchten in Verbindung mit Aroma von Stockrosenbüten riecht.

Der erfindungsgemässe Lebensmittelfarbstoff stellt einen Extrakt dar, der aus anthozyanhaltigen Rohstoffen extrahiert ist, welche seine Güte und Farbe bestimmen. Die vielfältige Farbenpalette wird durch Vorhandensein verschiedener Typen von Anthozyanen und ihrer verschiedenen Mengen gesichert. Das Vorliegen der Glykoside von Zyanidin in einer Menge von 2,3 bis 6,4 Masse%, Päonidin in einer Menge von 0,2 bis 5,3 Masse%, Delphinidin in einer Menge von 0,2 bis 3,5 Masse% im erfindungsgemässen Lebensmittelfarbstoff in Verbindung mit einem geringen Gehalt an Malvidinglykosiden von 0,4 bis 3,0 Masse% und an Petunidinglykosiden von 0,1 bis 1,5 Masse% macht es möglich, eine rote, Himbeer- und hochrote Farbe zu erreichen, wodurch der angegebene Farbstoff zur Herstellung von Konditoreierzeugnissen und alkoholfreien Getränken verwendet werden kann. Durch Vorliegen der Glykoside von Zyanidin in einer Menge von 2,0 bis 6,0 Masse%, von Päonidin in einer Menge von 0,1 bis 5,3 Masse%, von Delphinidin in einer Menge von 0,75 bis 1,8 Masse% im erfindungsgemässen Lebensmittelfarbstoff in Verbindung mit einem geringen Gehalt an Malvidin von 0,1 bis 2,0 Masse% und Petinidin von 0,05 bis 0,60 Masse% kann man den angegebenen Farbstoff zur Herstellung von Wurstwaren verwenden, indem man eine beständige Farbe von Erzeugnissen im erforderlichen Bereich von rosigen Farben bewirkt.

Das Vorliegen der Glykoside von Zyanidin in einer Menge von 0,2 bis 0,45 Masse%, von Delphinidin in einer Menge von 0,10 bis 1,85 Masse%, von Päonidin in einer Menge von 0,60 bis 0,95 Masse% im erfindungsgemässen Lebensmittelfarbstoff in Verbindung mit einem bedeutenden Gehalt an Malvidinglykosiden von 0,91 bis 2,35 Masse% und an Petunidinglykosiden von 0,25 bis 0,55 Masse% sichert eine beständige dunkelrote Farbe mit einem Stich ins Violett, was die Verwendung des angegebenen Farbstoffs zur Fleischstempelung möglich macht.

Der erfindungsgemässe Lebensmittelfarbstoff, hergestellt aus pflanzlichen Rohstoffen, ist stabil, weist einen angenehmen Geschmack und Geruch und stellt ein nichttoxisches Produkt dar.

Der erfindungsgemässe Lebensmittelfarbstoff war auf die Toxizität im Tierversuch geprüft. Die Prüfergebnisse haben gezeigt, dass der erfindungsgemässe Lebensmittelfarbstoff keine toxischen Verbindungen enthält und den Gesamtzustand von Versuchstieren nicht ändert.

Der erfindungsgemässe Lebensmittelfarbstoff enthält ausserdem als aus pflanzlichen Rohstoffen hergestellter Extrakt biologisch wirksame Verbindungen, extrahiert aus pflanzlichen Ausgangsstoffen. Biologisch wirksame Verbindungen erhöhen die Güte des erfindungsgemässen Lebensmittelfarbstoffs gegenüber den bekannten Lebensmittelfarbstoffen.

Der erfindungsgemässe Lebensmittelfarbstoff wird wie folgt hergestellt. Fruchtfleischtrester anthozyanhaltiger Pflanzen werden einer Extraktion mit einer angesäuerten Wasser-Äthanol-Lösung unterworfen.

Als Fruchtfleischtrester anthozyanhaltiger Pflanzen dienen solche der schwarzfarbigen Sorten von Weintraube, Pflaume, Kirsche und Maulbeerbaum. Man verwendet vorzugsweise Fruchtfleischtrester von Maulbeerbaum Morus nigra oder Weintraube Vitis vinifera. Als Extraktionsmittel wird die wässrige Äthanollösung verwendet, deren Konzentration sich nach dem vollen und selektiven Extrahieren von Anthozyanen richtet. Um Anthozyane völlig zu extrahieren und ihre Farbe zu zeigen, führt man die Extraktion in einem sauren Medium bei höchstens 3,5 pH-Wert durch. Zur Herstellung des Lebensmittelfarbstoffs mit einem bestimmten Gehalt an Anthozyanen verwirklicht man dann die technologischen Arbeitsgänge nach folgender Reihe.

Mit dem aus Trestern gewonnenen Extrakt isoliert man in einem Fall zum zweitenmal Anthozyane aus Blüten anthozyanhaltiger Pflanzen, wobei als solche Blüten der Stockrose Althaea rosea oder Hybridformen Hibiscus spp. vorzugsweise dienen. Zur Herstellung des Lebensmittelfarbstoffs mit einem hohen Gehalt an Anthozyanen vermischt man den abgetrennten sekundären Extrakt mit dem Fruchtsaft des Maulbeerbaums Morus nigra. Dann dampft man den sekundären Extrakt oder sein Gemisch mit dem Saft des Maulbeerbaums in Gegenwart von Tannin ein und stellt das Endprodukt her. Im anderen Fall wird der aus Fruchtfleischtrestern anthozyanhaltiger Pflanzen gewonnene Extrakt eingedampft. Dann erfolgt die Extraktion von Anthozyanen aus Blüten anthozyanhaltiger Pflanzen mit einer auf höchstens 3,5 pH-Wert angesäuerten wässrigen Lösung. Den erhaltenen Extrakt trennt man ab, dampft ein und vermischt mit dem eingedampften Extrakt aus Trestern in einem Verhältnis von 1:4 bzw. 1:5. Dem gewonnenen Gemisch setzt man Tannin zu und stellt das Lebensmittelprodukt her.

Das Endprodukt wird in Trockenform oder als dickes Konzentrat hergestellt.

Zur Herstellung des Lebensmittelfarbstoffs für Konditoreierzeugnisse, Wurstwaren und alkoholfreie Getränke ist der Prozess vorzugsweise wie folgt durchzuführen.

Fruchtfleischtrester von Weintraube Vitis vinifera, Maulbeerbaum Morus nigra werden mit einer auf einen pH-Wert von 2,7 bis 3,0 angesäuerten wässrigen Äthanollösung extrahiert. Mit dem gewonnenen Extrakt isoliert man dann zum zweitenmal Anthozyane aus Blüten der Stockrose Althaea rosea oder Hybridformen Hibiscus spp. Der erhlatene angereicherte Extrakt wird mit dem Fruchtsaft des Maulbeerbaums Morus nigra vermischt, der als Abfallprodukt bei der Herstellung des Saatguts für die Aufzucht des Maulbeerseidenspinners anfällt. Dann erfolgt das Eindampfen in Gegenwart von Tannin.

Die Verwendung des aus Fruchtfleischtrestern der schwarzfarbigen Sorten von Maulbeerbaum, Weintraube gewonnenen Extrakts als Extraktionsmittel zum Extrahieren von Anthozyanen aus Blüten der Stockrose oder Hybridformen Hibiscus spp. bewirkt einen höheren Gehalt an Anthozyan - komponenten im Farbstoff. Das Vermischen des Extrakts mit dem Früchtsaft des Maulbeerbaums Morus nigra macht es möglich, die Menge von Anthozyanen darunter von Zyanidinglykosiden des Endprodukts zu steigern, was dem Endprodukt die bestimmten Farbtöne verleiht.

Durch Eindampfen des vermischten Extrakts in Gegenwart von Tannin, welches ein gutes Antioxydations- und Stabilisierungsmittel ist, kann man den Verlust an Anthozyanen wegen ihrer Zersetzung beim Verdampfen vermeiden.

Zur Herstellung des Lebensmittelfarbstoffs für die Fleischstempelung ist der Prozess vorteilhaft wie folgt durchzuführen.

Man führt die Extraktion von Trestern der Weintraube Vitis vinifera mit 25- bis 35%iger wässriger Äthanollösung, angesäuert auf einen pH-Wert von 2,7 bis 3,0 durch. Die angegebene Konzentration der wässrigen Äthanollösung sichert das volle und selektive Isolieren schwer löslicher Anthozyane (Glykoside von Malvidin und Petunidin).

Den gewonnenen Extrakt dampft man ein, bis der Gehalt an Trickensubstanzen 36 bis 42% erreicht, führt dann die Extraktion von Blüten der Stockrose mit 1- bis 2%iger wässriger Zitronensäurelösung unter anschliessendem Eindampfen derselben bis zum Erreichen des Trockengehalts von 42 bis 45% durch und vermischt sie mit dem eingedampften Extrakt, gewonnen aus Weintrestern, in einem Verhältnis von 1:4 bzw. 1:5. Dem erhaltenen Gemisch der eingedampften Extrakte werden 3 bis 6 Masse% Tannin Zugesetzt. Dank der angegebenen Menge von Tannin wird die Bindung des Farbstoffs an Fleischeiweiss sichergestellt. Das Verfahren ermöglicht die Herstellung des Farbstoffs von gesättigter dunkelroter Farbe, der pastenartig und beständig gegen Temperaturgefälle ist. Das erfindungsgemässe Verfahren gestattet die Qualität des Lebensmittelfarbstoffs aus anthozyanhaltigen Pflanzen bedeutend zu erhöhen (d.h. den Anthozyanangehalt auf 12,5 Masse% zu bringen).

Das erfindungsgemässe alkoholfreie Tonikum besteht aus folgenden Komponenten in kg je 100 dal Getränk:

| | | |
|---|---|---|
| Fruchtsaft | 100,0 bis | 106,0 |
| Zucker | 67,0 bis | 71,0 |
| Zitronensäure | 1,28 bis | 1,40 |
| Lebensmittelfarbstoff gemäss der Erfindung | 1,54 bis | 1,80 |
| Vanillin | 0,0017 bis | 0,0022 |
| Äthylalkohol | 0,04 bis | 0,06 |
| Kohlendioxid | 20,0 | |
| Wasser | Rest | |

Das erfindungsgemässe alkoholfreie Tonikum, hergestellt unter Verwendung des erfindungsgemässen Fabstoffs, besitzt einen angenehmen Geschmack und Fruchtgeruch und ist beständig rosafarben.

Die tonischen Eigenschaften des erfindungsgemässen Getränks werden Anthozyane, Flavonole als Bestandteile des erfindungsgemässen Farbstoffs, die die Eigenschaften des Vitamins P besitzen, sowie durch organische Säuren und biologisch wirksame Stoffe sichergestellt.

Die um Getränk vorhandene Zitronensäure sorgt dafür, dass das Getränk neben dem angenehmen sauren Geschmack eine beständige rosa Farbe aufweist. Der Fruchtsaft bildet die Grundlage des Getränks, und das Vorliegen von im Alkohol gelöstem Vanillin hebt den natürlichen Fruchtgeruch hervor.

Zu einem besseren Verständnis der vorliegenden Erfindung werden folgende Beispiele für die Zusammensetzung des erfindungsgemässen Lebensmittelfarbstoffs, ein Verfahren zur Herstellung desselben und des erfindungsgemässen Getränks angeführt, welches diesen Lebensmittelfarbstoff enthält.

Beispiel 1

Lebensmittelfarbstoff für Konditoreierzeugnisse und Wurstwaren von folgender Zusammensetzung in Masse%:

| | |
|---|---|
| Zyanidinglykoside | 4,70 |
| Delphidinglykoside | 1,10 |
| Päonidinglykoside | 3,70 |
| Malvidinglykoside | 1,30 |
| Petunidinlgykoside | 0,40 |
| Flavonole | 1,50 |
| Tannin | 1,80 |
| organische Säuren | 32,00 |
| Mineralsalze, Spurenelemente, Polysaccharide | alles übrige |

Der angegebene Lebensmittelfarbstoff wird wie folgt hergestellt. 6 kg Fruchtfleischtrester des Maulbeerbaums und 1,2 kg Weintrester werden mit 100 l 25%iger wässriger Äthanollösung, die 0,7% Essigsäure, 0,7% Zitronensäure (pH = 2,7) anthält, bei Raumtemperatur extrahiert, bis Anthozyane in einer Menge von 3,0 g/l isoliert werden. Man erhält 80 l Extrakt mit 3,0 g/l Gehalt an Anthozyanen.

Mit dem gewonnenen Extrakt führt man dann zum zweitenmal die Extraktion von 3 kg Blüten der Stockrose Althaea rosea durch, bis die Anthozyane in einer Menge von 5,3 g/l extrahiert werden. Man erhält 60 l sekundären Extrakt mit 5,3 g/l Gehalt an Anthozyanen.

Dem erhaltenen sekundären Extrakt setzt man 0,005 kg Tannin zu, dampft bei einer zwischen 65 und 70°C liegenden Temperatur unter einem Vakuum von 620 bis 650 Torr ein und trocknet anschliessend. Man erhält 2,3 kg Endprodukt, welches ein dunkelrotes sauer schmeckendes Pulver von angenehmem Fruchtaroma darstellt und 11,2 Masse% Anthozyane enthält. Der angegebene Farbstoff ist bei der Herstellung von Fruchtbonbons in einer Menge von 0,45 Masse% verwendet. Er verleiht dem Karamell eine beständige rote Farbe.

Der angegebene Farbstoff ist auch bei der Herstellung von Brühwürsten in einer Menge von 0,6 Masse% verwendet. Er verleiht den Wurstwaren eine beständige rosa Farbe.

Beispiel 2

Lebensmittelfarbstoff für alkoholfreie Getränke folgender Zusammensetzung in Masse%:

| | |
|---|---|
| Zyanidinglykoside | 4,90 |
| Delphinidinglykoside | 1,00 |
| Päonidinglykoside | 3,80 |
| Malvidinglykoside | 1,20 |
| Petunidinglykoside | 0,30 |
| Flavonole | 1,90 |
| Tannin | 2,00 |
| organische Säuren | 35,00 |
| Mineralsalze, Spurenelemente, Polysaccharide | alles übrige |

Der angegebene Farbstoff wird wie folgt hergestellt. 3 kg Weintrester und 4 kg Fruchtfleischtrester des Maulbeerbaums werden mit 250 l 20%iger wässriger Äthanollösung, die 0,6% Essigsäure und 0,8% Zitronensäure (pH= =2,7) enthält, bei Raumtemperatur extrahiert. Man erhält 285 l Extrakt mit 1,3 g/l Gehalt an Anthozyanen. Mit dem gewonnenen Extrakt führt man zum zweitenmal die Extraktion von 9 kg Blüten der Stockrose durch, bis der Gehalt an Anthozyanen im Extrakt 5,6 g/l beträgt. Man erhält 150 l sekundären Extrakt mit 5,6 g/l Gehalt an Anthozyanen. Dem hergestellten sekundären Extrakt setzt man 0,009 kg Tannin zu, dampft bei einer zwischen 65 und 70°C liegenden Temperatur unter einem Vakuum von 620 bis 650 Torr ein und trocknet anschliessend den konzentrierten Extrakt.

Man erhält 5,1 kg Endprodukt, welches ein dunkelrotes sauer schmeckendes Pulver von angenehmem Fruchtaroma ist und 11,3 Masse% Anthozyane enthält.

Der hergestellte Farbstoff ist bei der Herstellung eines Tonikums in einer Menge von 1,8 kg je 100 dal Getränk verwendet. Er verleiht dem Getränk eine beständige rosa Farbe, einen angenehmen Fruchtgeschmack und -geruch.

Beispiel 3

Lebensmittelfarbstoff für alkoholfreie Getränke von zum Beispiel 2 analoger Zusammensetzung. Man erhält den angegebenen Farbstoff analog zu dem im Beispiel 2 beschriebenen. Dem gewonnenen sekundären Extrakt, dessen Menge 145 l beträgt, werden 26 l Saft des Maulbeerbaums Morus nigra zugesetzt. Dem erhaltenen Gemisch fügt man 0,01 kg Tannin hinzu und dampft bei einer zwischen 65 und 70°C liegenden Temperatur unter einem Vakuum von 620 bis 650 Torr ein, wonach die Trocknung erfolgt.

Man erhält 7,9 kg Endprodukt, welches ein dunkelrotes sauer schmeckendes Pulver von angenehmem Fruchtaroma ist und 11,2 Masse% Anthozyane enthält.

Beispiel 4

Lebensmittelfarbstoff für Konditoreierzeugnisse folgender Zusammensetzung in Masse%:

| | |
|---|---|
| Zyanidinglykoside | 4,30 |
| Delphinidinglykoside | 0,86 |
| Päonidinglykoside | 4,80 |
| Malvidinglykoside | 1,85 |
| Petunidinglykoside | 0,69 |
| Flavonole | 1,70 |
| Tannin | 2,10 |
| organische Säuren | 32,00 |
| Mineralsalze, | |
| Spurenelemente, | |
| Polysaccharide | alles übrige |

Der angegebene Farbstoff wird wie folgt hergestellt.

3 kg Weintrester werden mit 170 l 25%iger wässriger Äthanollösung, welche 0,6% essigsäure, 0,7% Zitronensäure (pH = 2,7) enthält, bei Raumtemperatur extrahiert.

Man erhält 130 l Extrakt, der 1,36 g/l Anthozyane enthält. Mit diesem Extrakt führt man die Extraktion von 5 kg Blüten der Stockrose Althaea rosea durch, bis Anthozyane in einer Menge von 5,4 g/l extrahiert werden. Man gewinnt 90 l Extrakt mit 5,4 g/l Gehalt an Anthozyanen.

Dem erhaltenen Extrakt setzt man 0,006 kg Tannin zu und dampft bei einer zwischen 65 und 70°C liegenden Temperatur unter einem Vakuum von 620 bis 650 Torr ein, wonach die Trocknung erfolgt. Man erhält 2,8 kg Endprodukt, welches ein dunkelrotes sauer schmeckendes Pulver von angenehmem Fruchtaroma ist uns 12,5 Masse% Anthozyane enthält. Der angegebene Farbstoff ist in einer Menge von 0,32 Masse% bei der Herstellung von Konfekten aus Fruchtsaft und in einer Menge von 0,48 Masse% bei der Herstellung von Marmelade verwendet. Die hergestellten Konfekte aus Fruchtsaft besitzen eine beständige rosige Farbe und die Marmelade weist eine beständige rote Farbe auf.

Beispiel 5

Lebensmittelfarbstoff zum Anfärben von Konditoreierzeugnissen und alkoholfreien Getränken von folgender Zusammensetzung in Masse%:

| | |
|---|---|
| Zyanidinglykoside | 5,40 |
| Päonidinglykoside | 0,86 |
| Delphinidinglykoside | 0,94 |
| Malvidinglykoside | 1,50 |
| Petunidinglykoside | 0,50 |
| Flavonole | 2,30 |
| Tannin | 1,60 |
| organische Säuren | 34,00 |
| Mineralsalze, | |
| Spurenelemente | |
| Polysaccharide | alles übrige |

Der angegebene Farbstoff wird wie folgt hergestellt. 3 kg Fruchtfleischtrester des Maulbeerbaums und 2,5 kg Weintrester werden mit 240 l 25%iger wässriger Äthanollösung, welche 0,6% Essigsäure und 0,8% Zitronensäure (pH = 2,7) enthält, bei Raumtemperatur extrahiert, bis Anthozyane in einer Menge von 3,2 g/l isoliert werden.
Man erhält 180 l Extrakt, der 3,2 g/l Anthozyane enthält.
Mit den gewonnenen Extrakt führt man dann die Extraktion
von 8 kg Blüten der Hybridformen Hibiscus spp. wiederholf
durch, bis Anthozyane in einer Menge von 5,5 g/l isoliert
werden. Dem gewonnenen Extrakt setzt man 0,01 kg Tannin
zu und dampft bei einer zwischen 65 und 70°C liegenden
Temperatur unter einem Vakuum von 620 bis 650 Torr ein,
wonach die Trocknung erfolgt. Man erhält 3,9 kg Endprodukt, welches ein dunkelrotes sauer schmeckendes Pulver
von angenehmem Fruchtaroma ist und 9,2 Masse% Anthozyane
enthält.

Der angegebene Farbstoff wird in einer Menge von
0,81 Masse% bei der Herstellung von Karamell verwendet.
Er verleiht dem Karamell eine beständige dunkelrote Farbe.

Beispiel 6

Lebensmittelfarbstoff zur Fleischstempelung, der aus
folgenden Komponenten in Masse% besteht:

| | |
|---|---|
| Zyanidinglykoside | 0,30 |
| Delphinidinglykoside | 1,10 |
| Päonidinglykoside | 0,70 |
| Malvidinglykoside | 1,40 |
| Petunidinglykoside | 0,31 |
| Flavonole | 1,20 |
| Tannin | 5,30 |
| organische Säuren | 17,00 |
| Mineralsalze, Spurenelemente, Polysaccharide | 15,00 |
| Wasser und Äthylalkohol | alles übrige |

Der angegebene Farbstoff wird wie folgt hergestellt.
7,2 kg Blüten der Stockrose werden in einen Extraktor
aufgegeben und mit 190 l 1,5%iger wässriger Zitronensäurelösung (pH = 2,7) bei Raumtemperatur extrahiert, bis
die Hauptmenge von Anthozyanfarbstoffen (3,2 g/l) isoliert wird. Der gewonnene Extrakt wird eingedampft, bis
der Gehalt an Trockensubstanzen 43% und der an Anthozya-

nen 35 g/l erreicht.

15 kg Weintrester werden mit 250 l 30%iger wässriger Äthanollösung extrahiert, die 0,9% Zitronensäure und 0,4% Essigsäure enthält. Man erhält 175 l Extrakt, der 3,6 g/l Anthozyane enthält. Der gewonnene Extrakt wird eingedampft, bis der Gehalt an Trockensubstanzen 38% erreicht.

Der aus Weintrestern gewonnene eingedampfte Extrakt wird mit dem angegebenen Extrakt aus Blüten der Stockrose in einem Verhältnis von 1:4 vermischt, und dazu werden 5% Tannin, bezogen auf die Gesamtmasse, zugesetzt. Der angegebene Farbstoff wurde bei der Fleischstempelung verwendet. Man erhielt einen deutlichen Stempel, der während der Lagerung bei Tieftemperaturen beständig ist.

Beispiel 7

Alkoholfreies Tonikum folgender Zusammensetzung in kg je 100 dal Getränk:

| | |
|---|---|
| Traubensaft | 100,0 |
| Zucker | 69,0 |
| Zitronensäure | 1,29 |
| Lebensmittelfarbstoff | 1,80 |
| Vanillin | 0,0018 |
| Äthylalkohol | 0,04 |
| Kohlendioxid | 20,0 |
| Wasser | alles übrige |

In einen Behälter beschickt man einen aus Weinsaft mit Zucker vorbereiteten Sirup, gibt dann Zitronensäure, Vanillinlösung in Äthylalkohol, Lebensmittelfarbstoff in angegebenen Mengen auf. Man rührt das Gemisch um, kühlt ab, giesst in gefässe auf und setzt Wasser und Kohlensäure zu. Das hergestellte Getränk stellt eine klare rosafarbene Flüssigkeit mit angenehmem Fruchtaroma und Geschmack dar, die keinen Rückstand aufweist. Der Säuregehalt des Getränks beträgt 1;6 ml 1n-Alkalilösung, verbraucht beim Titrieren je 100 ml Getränk; Masseanteil von Trockensubstanzen beträgt 8,1%.

## Industrielle Anwendbarkeit

Der erfindungsgemässe Lebensmittelfarbstoff wird in der Lebensmittelindustrie zum Anfärben von Konditoreierzeugnissen, alkoholfreien Getränken, Wurstwaren, zur Stempelung von Fleisch und anderen Lebensmitteln verwendet. Der erfindungsgemässe Lebensmittelfarbstoff kann ausserdem in der pharmazeutischen und Parfümindustrie Verwendung finden.

PATENTANSPRÜCHE :

1. Lebensmittelfarbstoff aus pflanzlichen Rohstoffen auf der Basis von Anthozyanen, dadurch g e k e n n - z e i c h n e t , dass er einen Extrakt darstellt, der aus anthozyanhaltigen pflanzlichen Rohstoffen isoliert ist und aus folgenden Komponenten in Masse% besteht:

| | | | |
|---|---|---|---|
| Zyanidinglykoside | 0,2 | bis | 6,4 |
| Päonidinglykoside | 0,1 | bis | 5,3 |
| Delphinidinglykoside | 0,1 | bis | 4,0 |
| Malvidinglykoside und/ | 0,1 | bis | 3,6 |
| oder Petunidinglykoside | 0,05 | bis | 1,5 |
| Flavonole | 1,0 | bis | 6,0 |
| Tannin | 1,0 | bis | 14,0 |
| organische Säuren | 28,0 | bis | 43,0 |
| Mineralsalze, | | | |
| Spurenelemente, | | | |
| Polysaccharide | alles übrige | | |

2. Lebensmittelfarbstoff nach Anspruch 1 für Konditoreierzeugnisse und alkoholfreie Getränke, dadurch g e - k e n n z e i c h n e t , dass er einen Extrakt darstellt, der aus der Stockrose Althaea rosea oder den Hybridformen von Hibiscus spp., dem Maulbeerbaum Morus nigra und der Weintraube Vitis vinifera gewonnen ist und aus folgenden Komponenten in Masse% besteht:

| | | | |
|---|---|---|---|
| Zyanidinglykoside | 2,1 | bis | 6,4 |
| Päonidinglykoside | 0,2 | bis | 5,3 |
| Delphinidinglykoside | 0,2 | bis | 3,5 |
| Malvidinglykoside | 0,4 | bis | 3,0 |
| Petunidinglykoside | 0,1 | bis | 1,5 |
| Flavonole | 1,0 | bis | 6,0 |
| Tannin | 1,0 | bis | 5,0 |
| organische Säuren | 29,0 | bis | 40,0 |
| Mineralsalze, | | | |
| Spurenelemente, | | | |
| Polysaccharide | alles übrige. | | |

3. Lebensmittelfarbstoff nach Anspruch 1 für Wurst- waren, dadurch g e k e n n z e i c h n e t , dass er

einen Extrakt darstellt, der aus der Stockrose Althaea rosea oder den Hybridformen von Hibiscus spp., dem Maulbeerbaum Morus nigra, der Weintraube Vitis vinifera gewonnen ist und aus folgenden Komponenten in Masse% besteht:

| | |
|---|---|
| Zyanidinglykoside | 2,0 bis 6,0 |
| Päonidinglykoside | 0,1 bis 5,3 |
| Delphinidinglykoside | 0,75 bis 1,8 |
| Malvidinglykoside | 0,1 bis 2,0 |
| Petunidinglykoside | 0,05 bis 0,6 |
| Flavonole | 1,0 bis 6,0 |
| Tannin | 1,0 bis 5,0 |
| organische Säuren | 29,0 bis 40,0 |
| Mineralsalze, | |
| Spurenelemente und | |
| Polysaccharide | alles übrige |

4. Lebensmittelfarbstoff nach Anspruch 1 zur Fleischstempelung, dadurch g e k e n n z e i c h n e t , dass er einen eingedickten Wasser-Äthanol-Extrakt darstellt, der aus der Stockrose Althaea rosea oder den Hybridformen Hibiscus spp. und der Weintraube Vitis vinifera isoliert ist und aus folgenden Komponenten in Masse% besteht:

| | |
|---|---|
| Zyanidinglykoside | 0,20 bis 0,45 |
| Delphinidinglykoside | 0,10 bis 1,85 |
| Päonidinglykoside | 0,60 bis 0,95 |
| Malvidinglykoside | 0,91 bis 2,35 |
| Petunidinglykoside | 0,25 bis 0,55 |
| Flavonole | 1,00 bis 2,00 |
| Tannin | 4,00 bis 7,00 |
| organische Säuren | 13,00 bis 18,00 |
| Mineralsalze, | |
| Spurenelemente und | |
| Polysaccharide | 10,00 bis 17,00 |
| Wasser und Äthylalkohol | alles übrige |

5. Verfahren zur Herstellung des Lebensmittelfarbstoffs nach Anspruch 1 bis 5 durch Extraktion von Anthozyanen aus anthozyanhaltigen pflanzlichen Rohstoffen, Abtrennung des Extrakts und anschliessende Herstellung des Endprodukts aus diesem, dadurch g e k e n n z e i c h - n e t , dass man die Extraktion von Anthozyanen aus Fruchtfleischtrestern anthozyanhaltiger Pflanzen mit einer auf höchstens 3,5 pH-Wert angesäuerten Wasser-Äthanol-Lösung durchführt, dann mit dem aus Trestern gewonnenen Extrakt die sekundäre Extraktion von Anthozyanen aus Blüten anthozyanhaltiger Pflanzen verwirklicht und den sekundären Extrakt anschliessend abtrennt oder die primäre Extraktion von Anthozyanen aus Blüten anthozyanhaltiger Pflanzen mit einer auf höchstens 3,5 pH-Wert angesäuerten wässrigen Lösung vornimmt, den gewonnenen Extrakt eindampft und ihn mit dem angegebenen vorher eingedampften Extrakt aus Trestern in einem Verhältnis von 1:4 bzw. 1:5 vermischt, danach das Endprodukt isoliert, indem man dem erhaltenen Gemisch Tannin zusetzt oder den angegebenen sekundären Extrakt in Anwesenheit von Tannin eindampft.

6. Verfahren nach Anspruch 5, dadurch g e k e n n - z e i c h n e t , dass als Früchte anthozyanhaltiger Pflanzen Fruchtfleischtrester von Maulbeerbaum Morus nigra oder Weintraube Vitis vinifera dienen.

7. Verfahren nach Anspruch 5 bis 6, dadurch g e - k e n n z e i c h n e t , dass als anthozyanhaltige Pflanzen Blüten der Stockrose Althaea rosea oder Blüten der Hybridformen von Hibiscus spp. verwendet werden.

8. Verfahren nach Anspruch 5-7, dadurch g e k e n n - z e i c h n e t , dass man zur Herstellung eines Lebensmittelfarbstoffs mit einem hohen Gehalt an Anthozyanen den sekundären abgetrennten Extrakt mit dem Fruchtsaft des Maulbeerbaums Morus nigra vermischt.

9. Verfahren nach Anspurch 5-8, dadurch g e k e n n - z e i c h n e t , dass man zur Herstellung des Lebens- mittelfarbstoffs für Konditoreierzeugnisse, Wurstwaren und alkoholfreie Getränke die Extraktion von Fruchtfleischtrestern des Maulbeerbaums Morus nigra oder der Weintraube Vitis vinifera mit einer 20- bis 25%igen wässri- gen Äthanollösung, angesäuert auf einen pH-Wert von 2,7 bis 3,0, durchführt, dann mit dem gewonnenen Extrakt die Extraktion von Anthozyanen aus Blüten der Stockrose oder den Hybridformen von Hibiscus verwirklicht und den abgetrennten Extrakt mit dem Fruchsaft des Maulbeerbaums vermischt, danach das erhaltene Gemisch bei einer zwischen 65 und 70°C liegenden Temperatur in Anwesenheit von Tannin bis zur Herstellung des Endprodukts eindampft.

10. Verfahren nach Anspruch 5-8, dadurch g e k e n n - z e i c h n e t , dass man zur Herstellung eines Lebensmittelfarbstoffs zur Fleischstempelung mit einer 25- bis 32%igen wässrigen Äthanollösung, angesäuert auf einen pH-Wert von 2,7 vis 3,0, durchführt, den gewonnenen Extrakt eindampft, bis der Gehalt an Trockensubstanzen 36 bis 42% erreicht, dann die Extraktion von Blüten der Stockrose oder der Hybridformen von Hibiscus mit einer 1,5- bis 2%igen wässrigen Zitronensäurelösung unter darauffolgendem Eindampfen derselben verwirklicht, bis der Gehalt an Trockensubstanzen 42 bis 45% erreicht, den erhaltenen eingedampften Extrakt mit dem angegebenen Extrakt aus Trestern in einem Verhältnis von 1:4 bzw. 1:5 vermischt, dem Gemisch Tannin zusetzt und das Endprodukt erhält.

11. Alkoholfreies Tonikum, welches Zucker, Zitronensäure, Fruchtsaft, Vanillin, Äthylalkohol, Lebensmittelfarbstoff und Kohlendioxid enthält, dadurch g e k e n n - z e i c h n e t , dass es den Lebensmittelfarbstoff nach Anspruch 1 und 2 bei folgendem Verhältnis von Ausgangskomponenten in kg je 100 dal Getränk enthält:

| | |
|---|---|
| Fruchtsaft | 100,0 bis 106,0 |
| Zucker | 67,0 bis 71,0 |
| Zitronensäure | 1,28 bis 1,40 |
| Lebensmittelfarbstoff | 1,54 bis 1,80 |
| Vanillin | 0,0017 bis 0,0022 |
| Äthylalkohol | 0,04 bis 0,6 |
| Kohlendioxid | 20,0 |
| Wasser | alles übrige. |

88903465.8                                                    06·7C

# INTERNATIONAL SEARCH REPORT

International Application No PCT/SU 88/00009

## I. CLASSIFICATION OF SUBJECT MATTER (if several classification symbols apply, indicate all) *

According to International Patent Classification (IPC) or to both National Classification and IPC

IPC⁴  C 09 B 61/00, A 23 L 2/00

## II. FIELDS SEARCHED

| Minimum Documentation Searched [7] | |
|---|---|
| Classification System | Classification Symbols |
| IPC⁴ | C 09 B 61/00, A 23 L 2/00 |

Documentation Searched other than Minimum Documentation
to the Extent that such Documents are Included in the Fields Searched *

## III. DOCUMENTS CONSIDERED TO BE RELEVANT *

| Category * | Citation of Document, [11] with indication, where appropriate, of the relevant passages [12] | Relevant to Claim No. [13] |
|---|---|---|
| A | GB, A, 1119359, (UPRAVLENIE VINODELCHESKOI PROMYSHLENNOSTI), 10 July 1968 (10.07.68) see the claims | 1-6,9,10 |
| A | FR, A1, 2299385, (FINEDOC SICA S.A.), 27 August 1976 (27.08.76), see claims | 1-6,9,10 |
| A | SU, A1, 187192, (Krasnodarsky politekhnichesky institut), 21 November 1966 (21.11.66) see column 1, lines 23-26, column 3, lines 8-10 | 1-6,9,10 |
| A | SU, A1, 1033117, (Nauchno-proizvodstvennoe obiedinenie pivobezalkogolnoi promyshlennosti), 7 August 1983 (07.08.83), see columns 1-3 | 11 |
| A | SU, A1, 1197628, (Nauchno-proizvodstvennoe obiedinenie pivobezalkogolnoi promyshlennosti), 15 December 1985 (15.12.85), see columns 1,2 | 11 |
| | | ./. |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 18 July 1988 (18.07.88) | 5 October 1988 (05.10.88) |
| International Searching Authority | Signature of Authorized Officer |
| ISA/SU | |